# EUROPÄISCHE PATENTSCHRIFT

(11) **EP 4 023 528 B1**
(45) Veröffentlichungstag und Bekanntmachung des Hinweises auf die Patenterteilung: **28.01.2026**
(21) Anmeldenummer: 21218243.0
(22) Anmeldetag: 30.12.2021
(51) Int. Cl.: B62B 9/14

(54) **KINDERWAGEN**
PUSHCHAIR
POUSSETTE

(30) Priorität: 30.12.2020 DE 102020135138
(43) Veröffentlichungstag der Anmeldung: 06.07.2022
(73) Patentinhaber: Osann GmbH, 78244 Gottmadingen (DE)
(72) Erfinder: Sklenarz, Johannes, 5505 Muehlbach am Hochkoenig (AT)
(74) Vertreter: Canzler & Bergmeier Patentanwälte Partnerschaft mbB

(56) Entgegenhaltungen:
- WO-A2-2008/010209
- WO-A2-2010/031846
- DE-C- 555 745
- GB-A- 2 571 964
- KR-A- 20180 079 597
- KR-U- 20110 003 557

## Beschreibung

Die vorliegende Erfindung betrifft einen Kinderwagen mit einem Aufnahmeraum für ein Kind, mit einem Zwischenboden zum Tragen des Kindes und mit einem Unterbodenraum, der auf der zum Aufnahmeraum gegenüberliegenden Seite des Zwischenbodens angeordneten ist.

Aus der DE 197 10 466 A1 ist ein Kinderwagen mit einem Ventilator bekannt.

In der DE 555 745 C ist ein Kinderwagen mit einem Lüfter im Unterboden offenbart.

In der KR 2018 0079597 A ist ebenfalls ein Kinderwagen offenbart, der zur Belüftung des Kindes eine Lüftung aufweist.

In der WO 2008/010209 A2 ist ein weiterer Kinderwagen offenbart, der im oberen Bereich einen Lüfter zu Belüftung des Kindes aufweist.

Aufgabe der vorliegenden Erfindung ist es, den Stand der Technik zu verbessern.

Die Aufgabe wird gelöst durch einen Kinderwagen mit den Merkmalen des unabhängigen Patentanspruchs. Bevorzugte Ausführungsbeispiele ergeben sich aus den abhängigen Ansprüchen.

Vorgeschlagen wird ein Kinderwagen für Kinder bzw. Kleinkinder. Mittels des Kinderwagens können die Kinder geschoben werden.

Der Kinderwagen umfasst einen Aufnahmeraum für das Kind.

Des Weiteren umfasst der Kinderwagen einen Zwischenboden zum Tragen des Kindes. Der Zwischenboden trägt dabei das Kind, so dass es im Aufnahmeraum aufgenommen ist.

Weiterhin umfasst der Kinderwagen einen Unterbodenraum, der auf der zum Aufnahmeraum gegenüberliegenden Seite des Zwischenbodens angeordneten ist.

Erfindungsgemäß weist der Kinderwagen eine elektrische Lüftungsvorrichtung auf, mittels der ein Kohlenstoffdioxidgehalt im Kinderwagen gesenkt werden kann. Im Kinderwagen, in welchem auch das Kind liegt oder sitzt, kann sich Kohlenstoffdioxid ansammeln, welches insbesondere vom Kind ausgeatmet wird. Gerade bei der frühen kindlichen Entwicklung kann das Kohlenstoffdioxid schädlich für die Entwicklung des Kindes sein. Mit Hilfe der Lüftungsvorrichtung wird der Kohlenstoffdioxidgehalt im Kinderwagen gesenkt.

Von Vorteil ist es, wenn die Lüftungsvorrichtung im Bereich des Unterbodenraums angeordnet ist. Dadurch kann der Kohlenstoffdioxidgehalt dort gesenkt werden. Zusätzlich oder alternativ kann die Lüftungsvorrichtung im Bereich des Aufnahmeraums angeordnet sein, um dort den Kohlenstoffdioxidgehalt zu senken.

Außerdem umfasst die Lüftungsvorrichtung eine Absaugvorrichtung, mittels der vom Kind ausgeatmetes Kohlenstoffdioxid aus dem Kinderwagen abgesaugt werden kann. Mittels der Absaugvorrichtung kann der Kohlenstoffdioxidgehalt im Kinderwagen für das Kind schonend gesenkt werden.

Zusätzlich ist es vorteilhaft, wenn die Lüftungsvorrichtung eine Belüftungsvorrichtung umfasst, mittels der Frischluft eingeblasen werden kann. Auch dadurch kann der Kohlenstoffdioxidgehalt im Kinderwagen gesenkt werden.

Mittels der Belüftungsvorrichtung kann die Frischluft gezielt eingebracht werden.

Von Vorteil ist es, wenn die Absaugvorrichtung aus dem Unterbodenraum das Kohlenstoffdioxid absaugen kann. Da Kohlenstoffdioxid schwerer ist als Luft, sinkt es zu Boden. Da der Unterbodenraum bei vorgesehener Verwendung des Kinderwagens unter dem Zwischenboden und somit unter dem Kind angeordnet ist, kann sich das Kohlenstoffdioxid im Unterbodenraum sammeln. Mittels der Absaugvorrichtung kann das Kohlenstoffdioxid von dort abgesaugt werden. Dadurch können für das Kind unangenehme Strömungen vermieden werden.

Zusätzlich oder alternativ kann die Absaugvorrichtung das Kohlenstoffdioxid auch aus dem Aufnahmeraum absaugen. Damit kann das Kohlenstoffdioxid direkt dort abgesaugt werden, wo es entsteht, nämlich am Kind. Unter Umständen kann es sein, dass sich auch im Bereich des Kindes das Kohlenstoffdioxid sammelt, so dass es vorteilhaft ist, wenn es dort abgesaugt wird.

Zusätzlich ist es von Vorteil, wenn die Belüftungsvorrichtung die Frischluft in den Unterbodenraum einblasen kann. Zusätzlich ist es vorteilhaft, wenn die Belüftungsvorrichtung die Frischluft in den Aufnahmeraum einblasen kann. Durch das Einblasen der Frischluft kann ebenfalls der Kohlenstoffdioxidgehalt gesenkt werden, da sich Luft mit einem hohen Kohlenstoffdioxidgehalt im Kinderwagen, insbesondere im Aufnahme- und/oder im Unterbodenraum, mit Frischluft vermischt.

Von Vorteil ist es, wenn der Kinderwagen zumindest einen Kohlenstoffdioxidsensor zum Messen des Kohlenstoffdioxidgehalts im Kinderwagen, insbesondere im Unterbodenraum und/oder Aufnahmeraum, aufweist. Der Kohlenstoffdioxidsensor kann dabei im Unterbodenraum angeordnet sein. Zusätzlich oder alternativ kann der Kohlenstoffdioxidsensor auch im Aufnahmeraum angeordnet sein. Mittels des Kohlenstoffdioxidsensors kann der Kohlenstoffdioxidgehalt ermittelt werden, so dass anhand dieser Messung die Lüftungsvorrichtung gesteuert werden kann.

Vorteilhaft ist es, wenn die Lüftungsvorrichtung zumindest einen elektrischen Ventilator umfasst, der in einer Außenwand des Unterbodenraums angeordnet ist. Dadurch kann die Luft direkt mit der Umgebung des Kinderwagens ausgetauscht werden. Der Ventilator kann in einem Kinderwagenboden des Kinderwagens angeordnet sein, so dass durch den Kinderwagenboden be- und/oder entlüftet werden kann. Dabei kann die Frischluft direkt von der Umgebung, insbesondere von unterhalb des Kinderwagens, in den Kinderwagen eingeblasen werden. Auch kann die Luft, die den hohen Kohlenstoffdioxidgehalt aufweist, aus dem Kinderwagen an die Umgebung abgegeben werden, wo diese sich verflüchtigt. Dabei kann die Absaugvorrichtung und/oder die Belüftungsvorrichtung den elektrischen Ventilator aufweisen.

Von Vorteil ist es, wenn der Zwischenboden wärmedämmend ausgebildet ist, wobei dieser insbesondere ein Wärmedämmmaterial, vorzugsweise Kork, aufweist. Dadurch kann das Kind warmgehalten werden.

Von Vorteil ist es, wenn der Zwischenboden steif und/oder selbstragend ausgebildet ist.

Von Vorteil ist es, wenn im Unterbodenraum ein Stützelement angeordnet ist, das den Zwischenboden in einem Innenbereich abstützt.

Vorteilhaft ist es, wenn in dem Aufnahmeraum auf dem Zwischenboden eine Matratze angeordnet ist. Dadurch kann das Kind bequem auf der Matratze bzw. dem Zwischenboden gebettet werden.

Zusätzlich oder alternativ ist es von Vorteil, wenn der Zwischenboden luftdurchlässig ist, so dass das Kohlenstoffdioxid vom Aufnahmeraum in den Unterbodenraum strömen kann. Zusätzlich oder alternativ kann auch die Matratze luftdurchlässig sein, so dass das Kohlenstoffdioxid vom Aufnahmeraum in den Unterbodenraum strömen kann. Dadurch kann das vom Kind ausgeatmete Kohlenstoffdioxid in den Unterbodenraum gelangen, so dass es infolgedessen vom Kind abgeführt wird. Im Unterbodenraum kann das Kohlenstoffdioxid gesammelt werden. Dort kann der Kohlenstoffdioxidgehalt mittels der Lüftungsvorrichtung gesenkt werden, indem beispielsweise das Kohlenstoffdioxid mittels der Absaugvorrichtung abgesaugt wird.

Von Vorteil ist es, wenn der Zwischenboden erste Durchgangsöffnungen aufweist. Dadurch kann das Kohlenstoffdioxid in den Unterbodenraum gelangen, indem es durch die ersten Durchgangsöffnungen hindurchströmt.

Zusätzlich oder alternativ ist es von Vorteil, wenn die Matratze zumindest teilweise aus einem luftdurchlässigen Material, insbesondere Mesh, ausgebildet ist. Infolgedessen kann das Kohlenstoffdioxid durch die Matratze in den Unterbodenraum gelangen.

Zusätzlich oder alternativ ist es von Vorteil, wenn die Matratze zweite Durchgangsöffnungen aufweist. Auch durch die zweiten Durchgangsöffnungen kann das Kohlenstoffdioxid hindurchströmen.

Zusätzlich oder alternativ kann durch die Matratze, durch die ersten und/oder zweiten Durchgangsöffnungen Frischluft hindurchströmen, um den Kohlenstoffdioxidgehalt im Kinderwagen zu senken.

Von Vorteil ist es, wenn die Matratze eine Polsterschicht mit den zweiten Durchgangsöffnungen aufweist. Mittels der Polsterschicht kann das Kind bequem liegen und mit den darin angeordneten zweiten Durchgangsöffnungen kann das Kohlenstoffdioxid und/oder die Frischluft hindurchströmen.

Zusätzlich oder alternativ weist die Matratze zumindest eine über und/oder unter der Polsterschicht angeordnete Abdeckschicht, insbesondere aus Mesh und/oder zum Abdecken der zweiten Durchgangsöffnungen, auf. Mit Hilfe der Abdeckschicht kann die Polsterschicht vor Beschädigung und/oder die zweiten Durchgangsöffnungen vor Schmutz geschützt werden. Außerdem kann die zumindest eine Abdeckschicht abnehmbar sein, so dass diese gereinigt werden kann.

Vorteilhaft ist es, wenn der Kinderwagen einen Anwesenheitssensor zum Erkennen eines im Aufnahmeraum liegenden Kindes aufweist. Anhand des Anwesenheitssensors kann beispielsweise die Lüftungsvorrichtung gesteuert werden. Wird beispielsweise das Kind entnommen, erkennt dies der Anwesenheitssensor bzw. dass kein Kind vorhanden ist, so dass die Lüftungsvorrichtung abgeschaltet wird.

Von Vorteil ist es, wenn der Anwesenheitssensor ein Drucksensor ist, der vorzugsweise am Zwischenboden, insbesondere an der dem Aufnahmeraum zugewandten Seite, angeordnet ist. Dadurch kann auf einfache Weise die Anwesenheit des Kindes ermittelt werden.

Vorteilhaft ist es, wenn die Matratze, insbesondere an ihrer dem Zwischenboden zugewandten Seite und/oder über der Abdeckschicht, eine mit dem Drucksensor korrespondierende, insbesondere harte und/oder steife, Druckplatte aufweist. Mittels der Druckplatte kann der sensitive Bereich für den Drucksensor vergrößert werden. Bewegt sich das Kind beispielsweise, kann immer noch die Anwesenheit mittels dem Drucksensor ermittelt werden.

Von Vorteil ist es, wenn der Kinderwagen einen Temperatursensor zum Erfassen der im Aufnahmeraum vorliegenden Temperatur aufweist. Auch damit kann die Lüftungsvorrichtung gesteuert werden. Bei zu hohen oder zu niedrigen Temperaturen kann der Kinderwagen be- und/oder entlüftet werden, um die Temperatur regeln zu können.

Vorteilhaft ist es, wenn der Kinderwagen einen Atemsensor zum Erfassen von Atempausen des Kindes umfasst. Der Atemsensor kann dabei auf, unter und/oder in der Matratze angeordnet sein. Mittels dem Atemsensor kann die Atmung des Kindes überwacht werden, wobei nach einer bestimmten Atempause ein Alarm ausgegeben werden kann. Dadurch kann ein plötzlicher Kindstod verhindert werden. Derartige Atemsensor können beispielsweise Sensorvorrichtungen aufweisen, welche die rhythmische Bewegung während der Atmung erfassen. Atemsensoren können jedoch auch Mikrofone umfassen, mittels der die Atemgeräusche überwacht werden können.

Von Vorteil ist es, wenn der Kinderwagen einen, insbesondere akustischen und/oder visuellen, Alarmgeber umfasst. Beispielsweise kann ein Alarmton abgegeben oder mittels einem Blinklicht ein Alarm angezeigt werden.

Vorteilhaft ist es, wenn der Kinderwagen eine Steuereinheit aufweist. Die Steuereinheit kann derart ausgebildet sein, dass diese in Abhängigkeit des vom Kohlenstoffdioxidsensors gemessenen Kohlenstoffdioxidgehalts die Lüftungsvorrichtung, insbesondere die Absaugvorrichtung und/oder die Belüftungsvorrichtung, und/oder den Alarmgeber automatisch aktivieren und deaktivieren kann. Steigt beispielsweise der Kohlenstoffdioxidgehalt über einen Grenzwert kann die Steuereinheit die Lüftungsvorrichtung und/oder den Alarmgeber aktivieren.

Zusätzlich oder alternativ kann die Steuereinheit derart ausgebildet sein, dass in Abhängigkeit der vom Anwesenheitssensors erfassten Anwesenheit des Kindes die Lüftungsvorrichtung, insbesondere die Absaugvorrichtung und/oder die Belüftungsvorrichtung, und/oder den Alarmgeber automatisch aktiviert und deaktiviert werden kann. Beispielsweise kann die Steuereinheit die Lüftungsvorrichtung und/oder den Alarmgeber deaktivieren, wenn das Kind aus dem Kinderwagen entnommen wird, was mittels des Anwesenheitssensors erfasst wird.

Zusätzlich oder alternativ kann die Steuereinheit derart ausgebildet sein, dass in Abhängigkeit einer vom Atemsensor erfassten Atempause die Lüftungsvorrichtung, insbesondere die Absaugvorrichtung und/oder die Belüftungsvorrichtung, und/oder den Alarmgeber automatisch aktiviert und deaktiviert werden kann. Beispielsweise kann die Steuereinheit den Alarmgeber und/oder die Lüftungsvorrichtung aktivieren, wenn der Atemsensor ein Aussetzen der Atmung des Kindes ermittelt hat.

Zusätzlich oder alternativ kann die Steuereinheit derart ausgebildet sein, dass in Abhängigkeit einer vom Temperatursensor erfassten Temperatur die Lüftungsvorrichtung, insbesondere die Absaugvorrichtung und/oder die Belüftungsvorrichtung, und/oder den Alarmgeber automatisch aktiviert und deaktiviert werden kann. Beispielsweise kann die Lüftungsvorrichtung und/oder der Alarmgeber aktiviert werden, wenn die Temperatur im Kinderwagen einen Grenzwert übersteigt, um ein Überhitzen des Kindes zu vermeiden.

Von Vorteil ist es, wenn der Kinderwagen ein Bedienelement umfasst, mit dem die Lüftungsvorrichtung, insbesondere die Absaugvorrichtung und/oder die Belüftungsvorrichtung, manuell aktiviert und deaktiviert werden kann. Mit Hilfe des Bedienelements kann die Lüftungsvorrichtung auch aktiviert werden, wenn die Steuereinheit die Lüftungsvorrichtung nicht aktivieren würde.

Das Bedienelement kann somit, unabhängig davon, ob das Kind im Kinderwagen ist oder nicht oder ob beispielsweise der Kohlenstoffdioxidgehalt über dem Grenzwert liegt, aktiviert werden. Das Bedienelement kann ferner derart ausgebildet sein, dass es neben dem Aktivieren und Deaktivieren, also einer An- und einer Aus-Einstellung, eine Einstellung für einen Automatikbetrieb aufweist. Das Bedienelement kann somit drei Einstellungen aufweist. Mittels dem Automatikbetrieb kann dann die Steuereinheit, insbesondere in Abhängigkeit des zumindest einen oben genannten Sensors, die Lüftungsvorrichtung, insbesondere die Absaugvorrichtung und/oder die Belüftungsvorrichtung, und/oder den Alarmgeber steuern.

Von Vorteil ist es, wenn der Kinderwagen ein Display zur Anzeige eines von zumindest einem Sensor erfassten Wertes umfasst. Dadurch können die EItern abschätzen, ob die Lüftungsvorrichtung, insbesondere die Absaugvorrichtung und/oder die Belüftungsvorrichtung, aktiviert oder deaktiviert werden sollte.

Vorteilhaft ist es, wenn der Ventilator zusätzlich in einem Rücklauf betrieben werden kann, so dass Luft von außen in den Kinderwagen eingeblasen werden kann. Dadurch kann der Kinderwagen einfach und kostengünstig ausgebildet werden.

Von Vorteil ist es, wenn der Kinderwagen einen Energiespeicher aufweist, mittels dem zumindest die elektrische Lüftungsvorrichtung, insbesondere die Absaugvorrichtung und/oder die Belüftungsvorrichtung, betreibbar ist. Der Energiespeicher kann dabei einen Akkumulator und/oder eine austauschbare Batterie umfassen. Mittels des Energiespeichers kann ferner auch die Steuereinheit, das Display und/oder zumindest einer der oben genannten Sensoren betrieben werden. Mit Hilfe des Energiespeichers können ferner alle elektrischen Komponenten des Kinderwagens betrieben werden.

Vorteilhaft ist es, wenn der Kinderwagen zumindest eine Solareinheit aufweist, mittels der zumindest die elektrische Lüftungsvorrichtung, insbesondere die Absaugvorrichtung und/oder die Belüftungsvorrichtung, betreibbar und/oder der Energiespeicher aufladbar ist. Mittels der Solareinheit kann die für den Betrieb des Kinderwagens notwendige elektrische Energie erzeugt werden oder diese Energie kann zwischengespeichert werden. Die Solareinheit kann ferner abnehmbar sein, um den Kinderwagen in dem Bereich der Solareinheit oder um die Solareinheit selbst zu reinigen. Die Solareinheit kann beispielsweise auf einem Sonnenschutz und/oder einer Abdeckung angeordnet sein.

Von Vorteil ist es, wenn der Kinderwagen eine Heizeinheit aufweist, die vorzugsweise auf dem Zwischenboden angeordnet ist und/oder derart angeordnet ist, dass mit der elektrischen Lüftungsvorrichtung, insbesondere die Absaugvorrichtung und/oder die Belüftungsvorrichtung, von der Heizeinheit erwärmte Luft in den Aufnahmeraum geblasen werden kann. Insbesondere bei kälteren Witterungen kann damit das Kind gewärmt werden.

Vorteilhaft ist es, wenn der Kinderwagen, insbesondere an der Außenseite des Kinderwagenbodens, eine Beleuchtungseinrichtung aufweist. Mittels der Beleuchtungseinrichtung kann zum einen während dunklen Jahreszeiten oder abends die Straße beleuchtet werden, so dass die Sicht verbessert wird. Zum anderen kann mittels der Beleuchtungseinrichtung eine passive Beleuchtung erreicht werden, so dass bei Dunkelheit der Kinderwagen für andere Verkehrsteilnehmer sichtbar ist.

Von Vorteil ist es, wenn der Kinderwagen eine Funkschnittstelle, insbesondere Bluetooth, Wifi oder eine Mobilfunkschnittstelle aufweist. Insbesondere nach der Rückkehr von einem Spaziergang kann es sein, dass das Kind im Kinderwagen eingeschlafen ist. Mittels der Funkschnittstelle kann eine Verbindung zwischen Kinderwagen und einem Smartphone hergestellt werden, um Mitteilungen oder Alarme auf das Smartphone zu übertragen. Beispielsweise kann ein Alarm auf das Smartphone übertragen werden, wenn der Kohlenstoffdioxidgehalt ansteigt oder einen Grenzwert überschritten hat, wenn der Atemsensor ein Aussetzen der Atmung erkennt oder wenn der Temperatursensor ein Anstieg oder Abfallen der Temperatur ermittelt. Dadurch kann die Sicherheit für das Kind erhöht werden. Mittels der Mobilfunkschnittstelle kann ferner ein Alarm an abgelegenen Orten abgegeben werden. Beispielsweise kann darüber ein Notfalldienst alarmiert werden.

Weitere Vorteile der Erfindung sind in den nachfolgenden Ausführungsbeispielen beschrieben. Es zeigen:
- **Figur 1**: eine schematische Seitenansicht eines Kinderwagens mit einer elektrischen Lüftungsvorrichtung,
- **Figur 2**: eine Schnittansicht des Kinderwagens und
- **Figur 3**: eine teilweise geschnittene und eine teilweise schematische Ansicht des Kinderwagens.

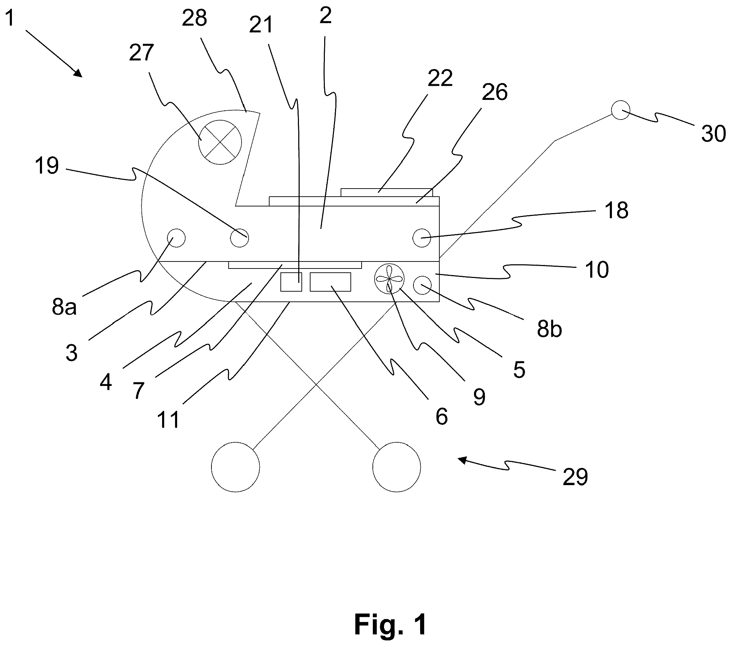

Figur 1 zeigt eine schematische Seitenansicht eines Kinderwagens 1 mit einer elektrischen Lüftungsvorrichtung 5. Der Kinderwagen 1 umfasst ein Fahrgestell 29, um den Kinderwagen 1 über Straßen schieben zu können. Ferner weist der Kinderwagen 1 einen Griff 30 zum Schieben auf. Zusätzlich weist der Kinderwagen 1 des vorliegenden Ausführungsbeispiels einen Sonnenschutz 28 auf, welcher klappbar sein kann.

Der Kinderwagen 1 umfasst einen Aufnahmeraum 2 für ein Kind, welches hier nicht gezeigt ist. Ferner umfasst der Kinderwagen 1 einen Zwischenboden 3 zum Tragen des Kindes. Trägt der Zwischenboden 3 das Kind, ist es im Aufnahmeraum 2 angeordnet. Außerdem umfasst der Kinderwagen 1 einen Unterbodenraum 4, welcher auf der zum Aufnahmeraum 2 gegenüberliegenden Seite des Zwischenbodens 3 angeordneten ist.

Ferner weist der Kinderwagen 1 die elektrische Lüftungsvorrichtung 5 auf, mittels der ein Kohlenstoffdioxidgehalt im Kinderwagen 1 gesenkt werden kann. Das Kind im Kinderwagen 1 atmet stets Kohlenstoffdioxid aus, welches schwerer ist als Luft. Infolgedessen sammelt sich das Kohlenstoffdioxid im Kinderwagen 1 an und kann somit dazu führen, dass das Kind zu wenig Sauerstoff erhält. Mittels der elektrischen Lüftungsvorrichtung 5 kann der Kohlenstoffdioxidgehalt im Kinderwagen 1 gesenkt werden. Die elektrische Lüftungsvorrichtung 5 kann auch einfach nur als Lüftungsvorrichtung 5 bezeichnet werden.

Die Lüftungsvorrichtung 5 kann, wie in diesem Ausführungsbeispiel gezeigt ist, im Bereich des Unterbodenraums 4 angeordnet sein, um dort den Kohlenstoffdioxidgehalt zu senken. Da, wie oben beschrieben ist, Kohlenstoffdioxid schwerer ist als Luft, sammelt es sich an den tiefsten Stellen des Kinderwagens 1, so dass es sich im Bereich des Unterbodenraums 4 sammeln kann. Zusätzlich oder alternativ kann die Lüftungsvorrichtung 5 auch im Bereich des Aufnahmeraums 2 angeordnet sein, um dort den Kohlenstoffdioxidgehalt zu senken. Der Kohlenstoffdioxidgehalt wird dadurch direkt am Kind gesenkt oder wenn das Kohlenstoffdioxid beispielsweise nicht in den Unterbodenraum 4 gelangen kann.

Ferner umfasst die Lüftungsvorrichtung 5 eine Absaugvorrichtung, mittels der das vom Kind ausgeatmete Kohlenstoffdioxid abgesaugt werden kann. Ist die Absaugvorrichtung im Bereich des Unterbodenraums 4 angeordnet, kann es das dort angesammelte bzw. sich sammelnde Kohlenstoffdioxid absaugen. Zusätzlich oder alternativ kann die Absaugvorrichtung auch im Bereich des Aufnahmeraums 2 angeordnet sein, um das Kohlenstoffdioxid aus dem Aufnahmeraum 2 abzusaugen.

Zusätzlich kann die Lüftungsvorrichtung 5 auch eine Belüftungsvorrichtung umfassen, mittels der Frischluft eingeblasen werden kann. Auch dadurch kann der Kohlenstoffdioxidgehalt gesenkt werden. Die Belüftungsvorrichtung kann dabei im Bereich des Aufnahmeraums 2 angeordnet sein, um die Frischluft in den Aufnahmeraum 2 zu blasen. Dadurch gelangt die Frischluft unmittelbar zum Kind. Zusätzlich oder alternativ kann die Belüftungsvorrichtung auch im Bereich des Unterbodenraums 4 angeordnet sein, um dort die Frischluft einzublasen.

Gemäß dem hier gezeigten Ausführungsbeispiel ist die Lüftungsvorrichtung 5 seitlich am Kinderwagen 1 angeordnet. Die Lüftungsvorrichtung 5 ist dabei in einer Außenwand 10 des Kinderwagens 1 angeordnet, so dass eine Verbindung zur Umgebung hergestellt ist. Das abgesaugte Kohlenstoffdioxid kann somit an die Umgebung abgegeben werden. Auch kann die Frischluft von der Umgebung angesaugt werden. Zusätzlich oder alternativ kann die Lüftungsvorrichtung 5 auch in einem Kinderwagenboden 11 angeordnet sein, um das Kohlenstoffdioxid nach unterhalb des Kinderwagens 1 abzugeben.

Gemäß dem vorliegenden Ausführungsbeispiel weist die Lüftungsvorrichtung 5 einen Ventilator 9 auf, um Gas, also Luft und/oder Kohlenstoffdioxid, bewegen zu können. Der Ventilator 9 kann so betrieben werden, dass das Kohlenstoffdioxid aus dem Kinderwagen 1 abgesaugt wird. Zusätzlich oder alternativ kann der Ventilator 9 auch so betrieben werden, dass er Frischluft in den Kinderwagen 1 bläst.

Der Kinderwagen 1 des vorliegenden Ausführungsbeispiels weist ferner zumindest einen Kohlenstoffdioxidsensor 8a, 8b auf. Hier sind zwei Kohlenstoffdioxidsensoren 8a, 8b gezeigt, wobei ein erster Kohlenstoffdioxidsensor 8a im Bereich des Aufnahmeraums 2 und ein zweiter Kohlenstoffdioxidsensor 8b im Bereich des Unterbodenraums 4 angeordnet ist. Mit Hilfe des zumindest einen Kohlenstoffdioxidsensors 8a, 8b kann der Kohlenstoffdioxidgehalt im Kinderwagen 1 gemessen werden.

Außerdem weist der Kinderwagen 1 des vorliegenden Ausführungsbeispiels eine Steuereinheit 6 auf, mittels der zumindest die Lüftungsvorrichtung 5 gesteuert werden kann. Die Steuereinheit 6 kann dabei zumindest mit dem zumindest einen Kohlenstoffdioxidsensor 8a, 8b verbunden sein, um anhand der gemessenen Messwerte zumindest die Lüftungsvorrichtung 5 zu steuern. Zusätzlich oder alternativ kann die Steuereinheit 6 auch mit den weiteren insbesondere in der vorangegangenen und/oder nachfolgenden Beschreibung beschriebenen Sensoren verbunden sein, um zumindest die Lüftungsvorrichtung 5 zu steuern.

Des Weiteren weist der Kinderwagen 1 des vorliegenden Ausführungsbeispiels zumindest einen Anwesenheitssensor 7 auf, mittels dem eine Anwesenheit des Kindes ermittelt werden kann. Der Anwesenheitssensor 7 kann beispielsweise als ein Drucksensor ausgebildet sein, mittels dem die Anwesenheit des Kindes ermittelt wird. Zusätzlich oder alternativ zum zumindest einen Kohlenstoffdioxidsensor 8a, 8b kann auch der Anwesenheitssensor 7 mit der Steuereinheit 6 verbunden sein, so dass anhand der Anwesenheit des Kindes die Lüftungsvorrichtung 5 gesteuert werden kann. Beispielsweise kann die Steuereinheit 6 die Lüftungsvorrichtung 5 deaktivieren, wenn das Kind entnommen wird. Zusätzlich oder alternativ kann die Steuereinheit 6 die Lüftungsvorrichtung 5 auch aktivieren, wenn die Anwesenheit des Kindes ermittelt ist, so dass die Veranlassung zur Aktivierung der Lüftungsvorrichtung 5 gegeben ist.

Ebenso weist der Kinderwagen 1 des vorliegenden Ausführungsbeispiels einen Energiespeicher 21 auf, womit der Kinderwagen 1 betrieben werden kann. Insbesondere kann damit die Lüftungsvorrichtung 1 betrieben werden.

Weiterhin weist der Kinderwagen 1 des vorliegenden Ausführungsbeispiels zumindest eine Solareinheit 22 auf, mittels der der Kinderwagen 1 betrieben werden kann. Insbesondere kann mittels der Solareinheit 22 die Lüftungsvorrichtung 5 betrieben werden. Zusätzlich oder alternativ kann mittels der Solareinheit 22 auch der Energiespeicher 21 aufgeladen werden. Die Solareinheit 22 kann abnehmbar sein. Infolgedessen kann beispielsweise die Solareinheit 22 selbst oder der Teil des Kinderwagens 1 gereinigt werden, an dem die Solareinheit 22 angeordnet ist. Gemäß dem vorliegenden Ausführungsbeispiel ist die Solareinheit 22 an einer Abdeckung 26 für den Aufnahmeraum 2 angeordnet. Durch Abnehmen der Solareinheit 22 kann somit in diesem Ausführungsbeispiel die Abdeckung 26 gereinigt oder ausgetauscht werden. Die Solareinheit 22 kann beispielsweise mittels Druckknöpfen, einem Reißverschluss und/oder einem Klettverschluss am Kinderwagen 1 abnehmbar angeordnet sein. Zusätzlich oder alternativ kann die hier gezeigte Solareinheit 2, vorzugsweise mit den hier beschriebenen Merkmalen, auch auf dem Sonnenschutz 28 angeordnet sein.

Ferner weist der Kinderwagen 1 des vorliegenden Ausführungsbeispiels zumindest einen Temperatursensor 18 auf, mittels dem die Temperatur im Kinderwagen 1 ermittelt werden kann. Der Temperatursensor 18 ist hier im Bereich des Aufnahmeraums 2 angeordnet, so dass die Temperatur beim Kind ermittelt werden kann. Der Temperatursensor 18 kann ferner mit der Steuereinheit 6 verbunden sein. Mit Hilfe des Temperatursensors 18 kann die Steuereinheit 6 die Lüftungsvorrichtung 5 aktivieren oder deaktivieren.

Außerdem weist der Kinderwagen 1 des vorliegenden Ausführungsbeispiels zumindest einen Atemsensor 19 auf, mittels dem eine Atmung des Kindes ermittelt werden kann. Der Atemsensor 19 ist, wie hier gezeigt ist, im Bereich des Aufnahmeraums 2 angeordnet. Zusätzlich oder alternativ kann der Atemsensor 19 auch im Bereich des Zwischenbodens 3, insbesondere unter dem Zwischenboden 3, angeordnet sein, um beispielsweise die rhythmische Atmung des Kindes erfassen zu können. Der Atemsensor 19 kann beispielsweise einen Bewegungssensor und/oder ein Mikrofon umfassen, um anhand dessen die Atmung des Kindes überwachen zu können. Mit Hilfe des Atemsensors 19 kann ein Aussetzen der Atmung des Kindes erfasst und ein entsprechender Alarm ausgegeben werden.

Um einen Alarm ausgeben zu können, weist der Kinderwagen 1 des vorliegenden Ausführungsbeispiels zumindest einen Alarmgeber 27 auf. Der Alarmgeber 27 kann akustische und/oder optische Alarme ausgeben. Der Alarmgeber 27 kann mit der Steuereinheit 6 verbunden sein, so dass diese beispielsweise bei einem Erfassen des Aussetzens der Atmung des Kindes mittels des Atemsensors 19 den Alarm ausgeben kann.

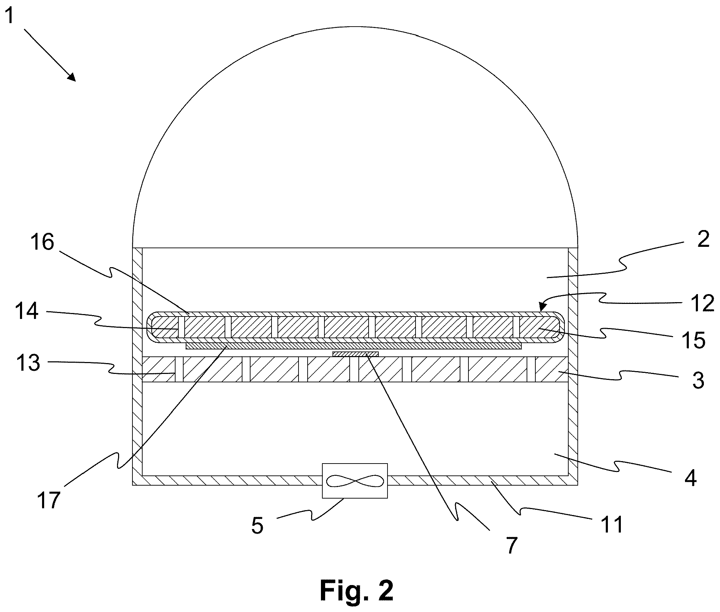

Figur 2 zeigt eine Schnittansicht des Kinderwagens 1. Die Ansicht ist hier von vorne.

Merkmale, welche bereits in der zumindest einen vorgegangenen Figur beschrieben sind, werden der Einfachheit halber nicht nochmals erklärt. Ferner können Merkmale auch erst in dieser oder in zumindest einer der nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Gemäß dem hier gezeigten Ausführungsbeispiel ist die Lüftungsvorrichtung 5 in dem Kinderwagenboden 11 angeordnet. Ferner ist die Lüftungsvorrichtung 5 im Bereich des Unterbodenraums 4 angeordnet.

Ferner weist gemäß dem hier gezeigten Ausführungsbeispiel der Zwischenboden 3 erste Durchgangsöffnungen 13 auf, wobei hier der Übersichtlichkeit halber lediglich eine erste Durchgangsöffnung 13 mit einem Bezugszeichen versehen ist. Mittels der ersten Durchgangsöffnungen 13 kann Gas, beispielsweise das Kohlenstoffdioxid und/oder Frischluft, durch den Zwischenboden 3 strömen. Da das Kohlenstoffdioxid schwerer ist als Luft, sinkt es automatisch vom Aufnahmeraum 2 in den Unterbodenraum 4.

Des Weiteren weist der Kinderwagen 1 eine Matratze 12 auf, welche auf der dem Aufnahmeraum 2 zugewandten Seite des Zwischenbodens 3 angeordnet ist. Auf der Matratze 12 kann das Kind bequem liegen.

Gemäß dem vorliegenden Ausführungsbeispiel weist die Matratze 12 zweite Durchgangsöffnungen 14 auf, wobei hier der Übersichtlichkeit halber lediglich eine zweite Durchgangsöffnung 14 mit einem Bezugszeichen versehen ist. Durch die zweiten Durchgangsöffnungen 14 kann ebenfalls Gas, beispielsweise das Kohlenstoffdioxid und/oder Frischluft, durch die Matratze 12 strömen. Insbesondere das Kohlenstoffdioxid kann durch die Matratze 12 in den Unterbodenraum 4 gelangen. Zusätzlich oder alternativ kann die Matratze 12 auch luftdurchlässig ausgebildet sein.

Die Matratze 12 umfasst gemäß dem vorliegenden Ausführungsbeispiel eine Polsterschicht 15, um das Kind bequem zu betten. Die Matratze 12 umfasst ferner zumindest eine Abdeckschicht 16, welche die Polsterschicht 15 abdeckt. Die Abdeckschicht 16 kann von der Polsterschicht 15 entfernbar sein, um diese beispielsweise zu reinigen. Auch die Abdeckschicht 16 kann luftdurchlässig sein.

Die Matratze 12, die Polsterschicht 15 und/oder die Abdeckschicht 16 können ferner auch ein Mesh sein.

Auf der dem Aufnahmeraum 2 zugewandten Seite des Zwischenbodens 3 ist gemäß dem vorliegenden Ausführungsbeispiel der Anwesenheitssensor 7 angeordnet, welcher ein Drucksensor sein kann.

Dem als Drucksensor ausgebildeten Anwesenheitssensor 7 kann eine Druckplatte 17 zugeordnet sein. Mittels der Druckplatte 17 kann die Anwesenheit des Kindes ermittelt werden, auch wenn es sich zur Seite bewegt. Mittels der Druckplatte 17 kann die Zuverlässigkeit des Anwesenheitssensors 7 verbessert werden, welcher hier als Drucksensor ausgebildet ist. Die Druckplatte 17 ist hier an der dem Zwischenboden 3 zugewandten Seite der Matratze 12 angeordnet. Zusätzlich oder alternativ kann die Druckplatte 17 auch am als Drucksensor ausgebildeten Anwesenheitssensor 7 und/oder am Zwischenboden 3 angeordnet sein.

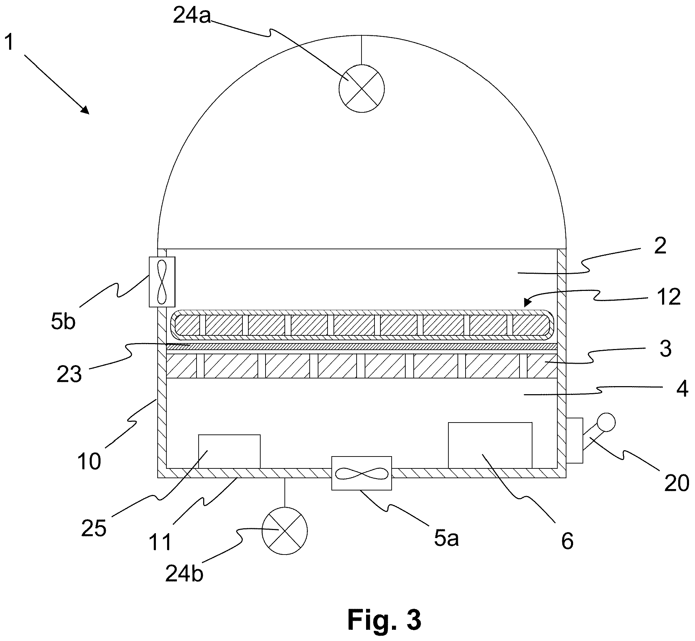

Figur 3 zeigt eine teilweise geschnittene und eine teilweise schematische Ansicht des Kinderwagens 1. Der Einfachheit halber werden nicht mehr alle Merkmale erläutert. Außerdem sind insbesondere im Vergleich zu zumindest einer der vorangegangenen Figuren nicht mehr alle Merkmale gezeigt.

Der Kinderwagen 1 des vorliegenden Ausführungsbeispiels umfasst ferner eine Heizeinheit 23, mittels der das Kind gewärmt werden kann. Die Heizeinheit 23 ist hier zwischen dem Zwischenboden 3 und der Matratze 12 angeordnet. Die Heizeinheit 23 ist auf der dem Aufnahmeraum 2 zugewandten Seite des Zwischenbodens 3 angeordnet. Zusätzlich oder alternativ kann die Heizeinheit 23 auch auf der dem Unterbodenraum 4 zugewandten Seite des Zwischenbodens 3 angeordnet sein. Die Heizeinheit 23 kann vorteilhafterweise auch von dem Energiespeicher 21 betrieben werden. Ferner kann die Heizeinheit 23 von der Steuereinheit 6 gesteuert werden. Die Steuereinheit 6 kann die Heizeinheit 23 in Abhängigkeit der Messung des Temperatursensors 18 steuern.

Des Weiteren weist der Kinderwagen 1 des vorliegenden Ausführungsbeispiels zwei Lüftungsvorrichtungen 5a, 5b auf. Die erste Lüftungsvorrichtung 5a ist im Bereich des Unterbodenraums 4 und die zweite Lüftungsvorrichtung 5b ist im Bereich des Aufnahmeraums 2 angeordnet. Beispielsweise kann die erste Lüftungsvorrichtung 5a die Absaugvorrichtung und die zweite Lüftungsvorrichtung 5b die Belüftungsvorrichtung sein. Dadurch kann das Kohlenstoffdioxid aus dem Unterbodenraum 4 abgesaugt und Frischluft in den Aufnahmeraum 2 geblasen werden. Es können auch beide Lüftungsvorrichtungen 5a, 5b Absaugvorrichtung sein. Es kann auch die erste Lüftungsvorrichtung 5a die Belüftungsvorrichtung und die zweite Lüftungsvorrichtung 5b die Absaugvorrichtung sein.

Gemäß dem vorliegenden Ausführungsbeispiel erstreckt sich die Außenwand 10 über den Aufnahmeraum 2 und den Unterbodenraum 4 in einer Hochrichtung. Der Aufnahmeraum 2 und der Unterbodenraum 4 haben somit dieselbe Außenwand 10. Der Zwischenboden 3 teilt somit den Aufnahmeraum 2 und den Unterbodenraum 4 und/oder erstreckt sich ebenfalls zwischen der Außenwand 10 des Kinderwagens 1 in Querrichtung des Kinderwagens 1. Zwischen Aufnahmeraum 2 und Unterbodenraum 4 ist lediglich der Zwischenboden 3 angeordnet, auf dem das Kind liegt.

Der Aufnahmeraum 2 und/oder der Unterbodenraum 4 erstrecken sich vollständig über die Quer- und/oder Längsrichtung des Kinderwagens 1 zwischen der Außenwand 10. Hierdurch ist der Aufnahmeraum 2 und/oder der Unterbodenraum 4 in Quer- und/oder Längsrichtung des Kinderwagens 1 so groß wie möglich ausgebildet.

Der Aufnahmeraum 2 und/oder der Unterbodenraum 4 erstrecken sich vollständig in Querrichtung zwischen der Außenwand 10. Die Außenwand 10 begrenzt somit den Aufnahmeraum 2 und/oder den Unterbodenraum 4 seitlich nach außen zur Umgebung des Kinderwagens 1.

Der Zwischenboden 3 ist gemäß dem vorliegenden Ausführungsbeispiel mit der Außenwand 10 verbunden.

Hierbei ist zu beachten, dass die Außenwand 10 einen Abschnitt links und rechts in der hier gezeigten Figur 3 aufweist. Erstreckt sich somit der Aufnahmeraum 2, der Unterbodenraum 4 und/oder der Zwischenboden 3 in Querrichtung bedeutet dies, dass sich diese vom linken Abschnitt bis zum rechten Abschnitt (in dieser Ansicht) der Außenwand 10 erstrecken. Zusätzlich oder alternativ kann die Außenwand 10, wie in Figur 1 gezeigt ist, einen vorderen Abschnitt und einen hinteren Abschnitt aufweisen. Somit können sich zusätzlich oder alternativ der Aufnahmeraum 2, der Unterbodenraum 4 und/oder der Zwischenboden 3 in Längsrichtung auch zwischen dem vorderen und dem hinteren Abschnitt (in der Ansicht der Figur 1) der Außenwand 10 erstrechen. Die Außenwand 10 kann dabei den Kinderwagenboden 11 umranden, der unten am Kindersitz 1 angeordnet ist.

Ferner weist der Kinderwagen 1 eine Funkschnittstelle 25 auf. Mittels der Funkschnittstelle 25 kann beispielsweise eine Verbindung zu einem Smartphone hergestellt werden, um einen Alarm auf das Smartphone zu übertragen. Die Funkschnittstelle 25 kann zusätzlich oder alternativ auch derart ausgebildet sein, dass eine Mobilfunkverbindung ausgebildet werden kann. Dadurch kann auch an abgelegenen Orten beispielsweise ein Notruf abgegeben werden.

Des Weiteren weist der Kinderwagen 1 ein Bedienelement 20 auf. Mittels des Bedienelements 20 kann beispielsweise die Lüftungsvorrichtung 5 abgeschaltet werden. Zusätzlich oder alternativ kann damit auch die Lüftungsvorrichtung 5 aktiviert werden. Zusätzlich oder alternativ kann damit auch ein Automatikbetrieb aktiviert werden, wobei die Steuereinheit 6 die Lüftungsvorrichtung 5 steuert.

Außerdem weist der Kinderwagen 1 zumindest eine Beleuchtungseinrichtung 24 auf. Eine erste Beleuchtungseinrichtung 24a ist dem Aufnahmeraum 2 zugeordnet, so dass auch bei Dunkelheit das Kind beleuchtet werden kann. Eine hier gezeigte zweite Beleuchtungseinrichtung 24b ist dem Untergrund zugeordnet, so dass der Untergrund, insbesondere Unebenheiten, erkannt werden können. Die zweite Beleuchtungseinrichtung 24b kann auch zur passiven Sicherheit beitragen, da dadurch bei Dunkelheit der Kinderwagen 1 von anderen Verkehrsteilnehmern erkannt wird.

### Bezugszeichenliste

- 1: Kinderwagen
- 2: Aufnahmeraum
- 3: Zwischenboden
- 4: Unterbodenraum
- 5: Lüftungsvorrichtung
- 6: Steuereinheit
- 7: Anwesenheitssensor
- 8: Kohlenstoffdioxidsensor
- 9: Ventilator
- 10: Außenwand
- 11: Kinderwagenboden
- 12: Matratze
- 13: erste Durchgangsöffnungen
- 14: zweite Durchgangsöffnungen
- 15: Polsterschicht
- 16: Abdeckschicht
- 17: Druckplatte
- 18: Temperatursensor
- 19: Atemsensor
- 20: Bedienelement
- 21: Energiespeicher
- 22: Solareinheit
- 23: Heizeinheit
- 24: Beleuchtungseinrichtung
- 25: Funkschnittstelle
- 26: Abdeckung
- 27: Alarmgeber
- 28: Sonnenschutz
- 29: Fahrgestell
- 30: Griff

## Patentansprüche

1. Kinderwagen (1)
mit einem Aufnahmeraum (2) für ein Kind,
mit einem Zwischenboden (3) zum Tragen des Kindes,
mit einem Unterbodenraum (4), der auf der zum Aufnahmeraum (2) gegenüberliegenden Seite des Zwischenbodens (3) angeordnet ist, und
wobei der Kinderwagen (1) eine elektrische Lüftungsvorrichtung (5) aufweist, mittels der ein Kohlenstoffdioxidgehalt im Kinderwagen (1) gesenkt werden kann, **dadurch gekennzeichnet,**
**dass** die Lüftungsvorrichtung (5) eine Absaugvorrichtung umfasst, mittels der vom Kind ausgeatmetes Kohlenstoffdioxid aus dem Kinderwagen (1) abgesaugt werden kann, und
**dass** die Lüftungsvorrichtung (5) in einer Außenwand (10) und/oder in einem Kinderwagenboden (11) des Kinderwagens (1) angeordnet ist, so dass eine Verbindung zur Umgebung hergestellt ist, so dass das abgesaugte Kohlenstoffdioxid an die Umgebung abgegeben werden kann.

2. Kinderwagen nach dem vorherigen Anspruch, **dadurch gekennzeichnet, dass** die Lüftungsvorrichtung (5) im Bereich des Unterbodenraums (4) und/oder im Bereich des Aufnahmeraums (2) angeordnet ist.

3. Kinderwagen nach einem oder mehreren der vorherigen Ansprüche, **dadurch gekennzeichnet, dass** die Lüftungsvorrichtung (5) eine Belüftungsvorrichtung umfasst, mittels der Frischluft in den Unterbodenraum (4) und/oder in den Aufnahmeraum (2) eingeblasen werden kann.

4. Kinderwagen nach einem oder mehreren der vorherigen Ansprüche, **dadurch gekennzeichnet, dass** der Kinderwagen (1) zumindest einen Kohlenstoffdioxidsensor (8) zum Messen des Kohlenstoffdioxidgehalts im Kinderwagen (1) aufweist, der im Unterbodenraum (4) und/oder Aufnahmeraum (2) angeordnet ist.

5. Kinderwagen nach einem oder mehreren der vorherigen Ansprüche, **dadurch gekennzeichnet, dass** die Lüftungsvorrichtung (5) zumindest einen elektrischen Ventilator (9) umfasst, der in einer Außenwand (10) des Unterbodenraums (4) angeordnet ist.

6. Kinderwagen nach einem oder mehreren der vorherigen Ansprüche, **dadurch gekennzeichnet, dass** der Zwischenboden (3) und gegebenenfalls eine auf dem Zwischenboden (3) angeordnete Matratze (12) luftdurchlässig ist, so dass das Kohlenstoffdioxid vom Aufnahmeraum (2) in den Unterbodenraum (4) strömen kann.

7. Kinderwagen nach Anspruch 6, **dadurch gekennzeichnet, dass** der Zwischenboden (3) erste Durchgangsöffnungen (13) aufweist und dass gegebenenfalls die Matratze (12) zumindest teilweise aus einem luftdurchlässigen Material ausgebildet ist und/oder zweite Durchgangsöffnungen (14) aufweist.

8. Kinderwagen nach einem oder mehreren der Ansprüche 6 und 7, **dadurch gekennzeichnet, dass** die Matratze (12) eine Polsterschicht (15) mit den zweiten Durchgangsöffnungen (14) und vorzugsweise zumindest eine über und/oder unter der Polsterschicht (15) angeordnete Abdeckschicht (16) aufweist.

9. Kinderwagen nach einem oder mehreren der vorherigen Ansprüche, **dadurch gekennzeichnet, dass** der Kinderwagen (1) einen Anwesenheitssensor (7) zum Erkennen eines im Aufnahmeraum (2) liegenden Kindes aufweist.

10. Kinderwagen nach einem oder mehreren der vorherigen Ansprüche in Kombination mit Anspruch 6, **dadurch gekennzeichnet, dass** die Matratze (12) eine mit einem Drucksensor als Anwesenheitssensor (7) korrespondierende Druckplatte (17) aufweist.

11. Kinderwagen nach einem oder mehreren der vorherigen Ansprüche, **dadurch gekennzeichnet, dass** der Kinderwagen (1) einen Atemsensor (19) zum Erfassen von Atempausen des Kindes umfasst und/oder dass der Kinderwagen (1) einen Temperatursensor (18) zum Erfassen der im Aufnahmeraum (2) vorliegenden Temperatur aufweist.

12. Kinderwagen nach einem oder mehreren der vorherigen Ansprüche, **dadurch gekennzeichnet, dass** der Kinderwagen (1) eine Steuereinheit (6) aufweist, die derart ausgebildet ist, dass diese in Abhängigkeit des vom Kohlenstoffdioxidsensors (8) gemessenen Kohlenstoffdioxidgehalts, in Abhängigkeit der vom Anwesenheitssensors (7) erfassten Anwesenheit des Kindes, in Abhängigkeit einer vom Atemsensor (19) erfassten Atempause und/oder in Abhängigkeit einer vom Temperatursensor (18) erfassten Temperatur die Lüftungsvorrichtung (5) und/oder einen Alarmgeber (27) automatisch aktivieren und deaktivieren kann.

13. Kinderwagen nach einem oder mehreren der vorherigen Ansprüche, **dadurch gekennzeichnet, dass** der Kinderwagen (1) ein Bedienelement (20) umfasst, mit dem die Lüftungsvorrichtung (5) manuell aktiviert und deaktiviert werden kann, und/oder
dass der Kinderwagen (1) ein Display zur Anzeige eines von zumindest einem Sensor (7, 8, 18, 19) erfassten Wertes umfasst.

14. Kinderwagen nach einem oder mehreren der vorherigen Ansprüche, **dadurch gekennzeichnet, dass** der Kinderwagen (1) einen Energiespeicher (21) aufweist, mittels dem zumindest die elektrische Lüftungsvorrichtung (5) betreibbar ist, und/oder
dass der Kinderwagen (1) zumindest eine Solareinheit (22) aufweist, mittels der zumindest die elektrische Lüftungsvorrichtung (5) betreibbar und gegebenenfalls der Energiespeicher (21) aufladbar ist.

15. Kinderwagen nach einem oder mehreren der vorherigen Ansprüche, **dadurch gekennzeichnet, dass** der Kinderwagen (1) eine Heizeinheit (23) aufweist, die auf dem Zwischenboden (3) angeordnet und/oder derart angeordnet ist, dass mit der elektrischen Lüftungsvorrichtung (5) von der Heizeinheit (23) erwärmte Luft in den Aufnahmeraum (2) geblasen werden kann, und/oder
dass der Kinderwagen (1) eine Funkschnittstelle (25) aufweist.

## Claims

1. Child carriage (1)
with an accommodating space (2) for a child,
with an intermediate floor (3) for carrying the child,
with an underfloor space (4) which is arranged on the side of the intermediate floor (3) opposite the accommodating space (2), and
wherein the child carriage (1) has an electric ventilation device (5) by means of which a carbon dioxide content in the child carriage (1) can be lowered, **characterized in that**
the ventilation device (5) comprises a suction device by means of which carbon dioxide exhaled by the child can be sucked out of the child carriage (1), and
the ventilation device (5) is arranged in an outer wall (10) and/or in a child carriage floor (11) of the child carriage (1), so that a connection to the surroundings is established, so that the sucked-out carbon dioxide can be released to the surroundings.

2. The child carriage according to the preceding claim, **characterized in that** the ventilation device (5) is arranged in the region of the underfloor space (4) and/or in the region of the accommodating space (2).

3. The child carriage according to one or more of the preceding claims, **characterized in that** the ventilation device (5) comprises a ventilation device by means of which fresh air can be blown into the underfloor space (4) and/or into the accommodating space (2).

4. The child carriage according to one or more of the preceding claims, **characterized in that** the child carriage (1) has at least one carbon dioxide sensor (8) for measuring the carbon dioxide content in the child carriage (1), which is arranged in the underfloor space (4) and/or accommodating space (2).

5. The child carriage according to one or more of the preceding claims, **characterized in that** the ventilation device (5) comprises at least one electric fan (9) which is arranged in an outer wall (10) of the underfloor space (4).

6. The child carriage according to one or more of the preceding claims, **characterized in that** the intermediate floor (3) and optionally a mattress (12) arranged on the intermediate floor (3) is air-permeable, so that the carbon dioxide can flow from the accommodating space (2) into the underfloor space (4).

7. The child carriage according to claim 6, **characterized in that** the intermediate floor (3) has first through-openings (13) and
optionally the mattress (12) is formed at least partially from an air-permeable material and/or has second through-openings (14).

8. The child carriage according to one or more of claims 6 and 7, **characterized in that** the mattress (12) has a padding layer (15) with the second through-openings (14) and preferably at least one cover layer (16) arranged above and/or below the padding layer (15).

9. The child carriage according to one or more of the preceding claims, **characterized in that** the child carriage (1) has a presence sensor (7) for detecting a child lying in the accommodating space (2).

10. The child carriage according to one or more of the preceding claims in combination with claim 6, **characterized in that** the mattress (12) has a pressure plate (17) corresponding to a pressure sensor as the presence sensor (7).

11. The child carriage according to one or more of the preceding claims, **characterized in that** the child carriage (1) comprises a breathing sensor (19) for capturing breathing pauses of the child and/or that the child carriage (1) has a temperature sensor (18) for capturing the temperature present in the accommodating space (2).

12. The child carriage according to one or more of the preceding claims, **characterized in that** the child carriage (1) has a control unit (6) which is designed such that it can automatically activate and deactivate the ventilation device (5) and/or an alarm device (27) in dependence on the carbon dioxide content measured by the carbon dioxide sensor (8), in dependence on the presence of the child captured by the presence sensor (7), in dependence on a breathing pause captured by the breathing sensor (19) and/or in dependence on a temperature captured by the temperature sensor (18).

13. The child carriage according to one or more of the preceding claims, **characterized in that** the child carriage (1) comprises an operating element (20) by means of which the ventilation device (5) can be manually activated and deactivated, and/or
the child carriage (1) comprises a display for displaying a value captured by at least one sensor (7, 8, 18, 19).

14. The child carriage according to one or more of the preceding claims, **characterized in that** the child carriage (1) has an energy store (21) by means of which at least the electric ventilation device (5) can be operated, and/or
the child carriage (1) has at least one solar unit (22) by means of which at least the electric ventilation device (5) can be operated and optionally the energy store (21) can be charged.

15. The child carriage according to one or more of the preceding claims, **characterized in that** the child carriage (1) has a heating unit (23) which is arranged on the intermediate floor (3) and/or is arranged such that air heated by the heating unit (23) can be blown into the accommodating space (2) by means of the electric ventilation device (5), and/or
the child carriage (1) has a radio interface (25).

## Revendications

1. Poussette (1)
avec un espace de réception (2) pour un enfant,
avec un plancher intermédiaire (3) pour porter l'enfant,
avec un espace de sous-plancher (4) qui est disposé sur le côté du plancher intermédiaire (3) opposé à l'espace de réception (2), et
la poussette (1) présentant un dispositif de ventilation électrique (5) au moyen duquel une teneur en dioxyde de carbone dans la poussette (1) peut être abaissée, **caractérisée en ce que**
le dispositif de ventilation (5) comprend un dispositif d'aspiration au moyen duquel du dioxyde de carbone exhalé par l'enfant peut être aspiré hors de la poussette (1), et
le dispositif de ventilation (5) est disposé dans une paroi extérieure (10) et/ou dans un plancher de poussette (11) de la poussette (1), de sorte qu'une liaison avec l'environnement est établie, de sorte que le dioxyde de carbone aspiré peut être délivré à l'environnement.

2. Poussette selon la revendication précédente, **caractérisée en ce que** le dispositif de ventilation (5) est disposé dans la région de l'espace de sous-plancher (4) et/ou dans la région de l'espace de réception (2).

3. Poussette selon une ou plusieurs des revendications précédentes, **caractérisée en ce que** le dispositif de ventilation (5) comprend un dispositif de ventilation au moyen duquel de l'air frais peut être insufflé dans l'espace de sous-plancher (4) et/ou dans l'espace de réception (2).

4. Poussette selon une ou plusieurs des revendications précédentes, **caractérisée en ce que** la poussette (1) présente au moins un capteur de dioxyde de carbone (8) pour mesurer la teneur en dioxyde de carbone dans la poussette (1), qui est disposé dans l'espace de sous-plancher (4) et/ou l'espace de réception (2).

5. Poussette selon une ou plusieurs des revendications précédentes, **caractérisée en ce que** le dispositif de ventilation (5) comprend au moins un ventilateur électrique (9) qui est disposé dans une paroi extérieure (10) de l'espace de sous-plancher (4).

6. Poussette selon une ou plusieurs des revendications précédentes, **caractérisée en ce que** le plancher intermédiaire (3) et éventuellement un matelas (12) disposé sur le plancher intermédiaire (3) est perméable à l'air, de sorte que le dioxyde de carbone peut s'écouler de l'espace de réception (2) dans l'espace de sous-plancher (4).

7. Poussette selon la revendication 6, **caractérisée en ce que** le plancher intermédiaire (3) présente des premières ouvertures de passage (13) et
**en ce que** le matelas (12) est éventuellement réalisé au moins en partie en un matériau perméable à l'air et/ou présente des deuxièmes ouvertures de passage (14).

8. Poussette selon une ou plusieurs des revendications 6 et 7, **caractérisée en ce que** le matelas (12) présente une couche de rembourrage (15) avec les deuxièmes ouvertures de passage (14) et de préférence au moins une couche de recouvrement (16) disposée au-dessus et/ou en dessous de la couche de rembourrage (15).

9. Poussette selon une ou plusieurs des revendications précédentes, **caractérisée en ce que** la poussette (1) présente un capteur de présence (7) pour reconnaître un enfant couché dans l'espace de réception (2).

10. Poussette selon une ou plusieurs des revendications précédentes en combinaison avec la revendication 6, **caractérisée en ce que** le matelas (12) présente une plaque de pression (17) correspondant à un capteur de pression en tant que capteur de présence (7).

11. Poussette selon une ou plusieurs des revendications précédentes, **caractérisée en ce que** la poussette (1) comprend un capteur de respiration (19) pour détecter des pauses de respiration de l'enfant et/ou **en ce que** la poussette (1) présente un capteur de température (18) pour détecter la température présente dans l'espace de réception (2).

12. Poussette selon une ou plusieurs des revendications précédentes, **caractérisée en ce que** la poussette (1) présente une unité de contrôle (6) qui est réalisée de telle sorte que celle-ci peut activer et désactiver automatiquement le dispositif de ventilation (5) et/ou un émetteur d'alarme (27) en fonction de la teneur en dioxyde de carbone mesurée par le capteur de dioxyde de carbone (8), en fonction de la présence de l'enfant détectée par le capteur de présence (7), en fonction d'une pause de respiration détectée par le capteur de respiration (19) et/ou en fonction d'une température détectée par le capteur de température (18).

13. Poussette selon une ou plusieurs des revendications précédentes, **caractérisée en ce que** la poussette (1) comprend un élément de commande (20) avec lequel le dispositif de ventilation (5) peut être activé et désactivé manuellement, et/ou
**en ce que** la poussette (1) comprend un affichage pour afficher une valeur détectée par au moins un capteur (7, 8, 18, 19).

14. Poussette selon une ou plusieurs des revendications précédentes, **caractérisée en ce que** la poussette (1) présente un stockage d'énergie (21) au moyen duquel au moins le dispositif de ventilation électrique (5) peut être actionné, et/ou
**en ce que** la poussette (1) présente au moins une unité solaire (22) au moyen de laquelle au moins le dispositif de ventilation électrique (5) peut être actionné et éventuellement le stockage d'énergie (21) peut être chargé.

15. Poussette selon une ou plusieurs des revendications précédentes, **caractérisée en ce que** la poussette (1) présente une unité de chauffage (23) qui est disposée sur le plancher intermédiaire (3) et/ou est disposée de telle sorte que de l'air chauffé par l'unité de chauffage (23) peut être soufflé dans l'espace de réception (2) avec le dispositif de ventilation électrique (5), et/ou
que la poussette (1) présente une interface radio (25).
